Europäisches Patentamt

**European Patent Office**

**Office européen des brevets**

(11) Veröffentlichungsnummer: **0 150 341**
A2

(12) ## EUROPÄISCHE PATENTANMELDUNG

(21) Anmeldenummer: 84114788.7

(51) Int. Cl.⁴: **H 04 L 13/08**

(22) Anmeldetag: 05.12.84

(30) Priorität: 31.01.84 DE 3403265

(43) Veröffentlichungstag der Anmeldung: 07.08.85
Patentblatt 85/32

(84) Benannte Vertragsstaaten: **CH DE FR IT LI SE**

(71) Anmelder: **Siemens Aktiengesellschaft, Berlin und München Wittelsbacherplatz 2, D-8000 München 2 (DE)**

(72) Erfinder: **Markwitz, Wernhard, Dr.-Ing., Thalkirchner Strasse 107, D-8000 München 70 (DE)**

(54) Verfahren und Anordnung zum selbsttätigen Protokollieren von Sendeaufträgen für zu übertragende Texte.

(57) Bei einer selbsttätigen Übertragung von mehreren Texten von einer sendenden Textstation zu einer empfangenden Textstation wird jedem Text ein entsprechender Sendeauftrag zugeordnet. Die Texte und die zugehörigen Sendeaufträge werden in einem internen Speicher (S) der Textstation gespeichert und entsprechend den Sendeaufträgen werden die Texte, gegebenenfalls zu vorgegebenen Zeitpunkten ausgesendet. Bei einer erfolgreichen Ausführung eines Sendeauftrags werden dieser und der zugehörige Text an einem Drucker (DR) ausgegeben und gleichzeitig im internen Speicher (S) gelöscht. Bei nicht erfolgreich durchgeführten Sendeaufträgen werden die Sendeversuche ebenfalls protokolliert, jedoch werden die entsprechenden Sendeaufträge und die zugehörigen Texte nicht gelöscht. Am Drucker (DR) oder einer Anzeigeeinheit (AE) werden, gegebenenfalls nach dem Betätigen einer Taste (T), Kurzprotokolle der nicht erfolgreich ausgeführten Sendeaufträge ausgegeben.

EP 0 150 341 A2

0150341

Siemens Aktiengesellschaft
Berlin und München

Unser Zeichen
VPA 84 P 1 0 5 5 E

Verfahren und Anordnung zum selbsttätigen Protokollieren von Sendeaufträgen für zu übertragende Texte

Die Erfindung bezieht sich auf ein Verfahren zum selbsttätigen Protokollieren von Sendeaufträgen für zu übertragende Texte gemäß dem Oberbegriff des Patentanspruches 1. Weiterhin bezieht sich die Erfindung auf eine Anordnung zur Durchführung des Verfahrens.

Bei einer Übertragung von Texten von einer sendenden Textstation zu einer empfangenden Textstation ist es bereits bekannt, die zu übertragenden Texte und diesen Texten zugeordnete Sendeaufträge mittels einer Tastatur und/ oder eines externen Speichers einzugeben. Die Textstation baut entsprechend dem Sendeauftrag eine Verbindung zur empfangenden Textstation auf und überträgt anschließend den Text. Falls die sendende Textstation als Fernschreibmaschine ausgebildet ist, werden Protokolle, die dem jeweiligen Verbindungsaufbau zugeordnet sind und die jeweils zugehörigen Texte an einer als Drucker ausgebildeten Ausgabeeinheit ausgegeben. Falls eine Verbindung zur empfangenden Textstation nicht zustandekommt, werden im Sendeprotokoll die Versuche zum Verbindungsaufbau protokolliert.

Falls mehrere Sendeaufträge selbsttätig und gegebenenfalls zu vorgegebenen Zeitpunkten ausgeführt werden sollen, um beispielsweise Zeiten auszunützen, in denen die Übertragungen kostengünstig durchgeführt werden können, wäre es denkbar, diejenigen Sendeaufträge und die zugehörigen Texte, die auf verschiedenen externen Datenträgern, bei-

Ret 1 Fra / 31.1.1984

0150341

spielsweise Disketten gespeichert sind, auf einen gemeinsamen externen Datenträger zu kopieren und dann in die Textstation einzugeben. Wenn dann, beispielsweise während der Nachtstunden, während die Textstation unbedient ist, die Sendeaufträge ausgeführt werden, ist es für eine Bedienperson am nachfolgenden Arbeitstag auf dem Ausdruck am Drucker sämtliche Sendeaufträge zu überprüfen, um gegebenenfalls nicht ausgeführte Sendeaufträge erneut einzugeben. Dieses Verfahren ist verhältnismäßig aufwendig und zeitraubend, da einerseits alle Sendeaufträge und die zugehörigen Nachrichten zunächst auf den gemeinsamen Datenträger kopiert werden müssen und da andererseits bei einer Vielzahl von Sendeaufträgen es äußerst umständlich ist, die Ausführung sämtlicher Sendeaufträge zu überprüfen.

Der Erfindung liegt daher die Aufgabe zugrunde, ein Verfahren und eine Anordnung anzugeben, bei deren Verwendung die Durchführung der Sendeaufträge vereinfacht wird und die nicht durchgeführten Sendeaufträge sehr schnell erkannt werden können.

Erfindungsgmäß wird die Aufgabe bei dem Verfahren der eingangs genannten Art durch die im kennzeichnenden Teil des Patentanspruchs 1 angegebenen Verfahrensschritte gelöst.

Das Verfahren gemäß der Erfindung hat den Vorteil, daß das zeitraubende Kopieren der auf verschiedenen externen Datenträgern gespeicherten Nachrichten auf einen gemeinsamen externen Datenspeicher entfällt und daß die Bedienperson sehr schnell erfassen kann, welche Sendeaufträge nicht ausgeführt wurden. Außerdem können die nicht ausgeführten Sendeaufträge sehr schnell und ohne die Verwendung des externen Datenträgers erneut ausgeführt werden.

Zweckmäßigerweise werden die Kurzprotokolle der nicht erledigten Sendeaufträge an der als Drucker ausgebildeten Ausgabeeinheit oder an einer als ein oder mehrzeilige Anzeigeeinheit ausgebildeten Ausgabeeinheit ausgegeben. Die Ausgabe erfolgt bevorzugt erst dann, wenn eine entsprechende Taste betätigt wird.

Da der Verbindungsaufbau und die Texte bei erfolgreich ausgeführten Sendeaufträgen durch den Drucker protokolliert werden, können die Sendeaufträge und die zugehörigen Texte anschließend im internen Speicher gelöscht werden. Bei nicht erfolgreich ausgeführten Sendeaufträgen werden diese und die zugehörigen Texte jedoch nicht gelöscht.

Eine bevorzugte Ausführungsform einer Anordnung zur Durchführung des Verfahrens enthält neben mindestens einem Speicher zum Speichern der Sendeaufträge und der zugehörigen Texte eine Steuereinheit, die, gegebenenfalls zu vorgegebenen Zeitpunkten die Verbindungen zu den empfangenden Textstationen herstellt, die die Übertragung der Texte steuert und die die Kurzprotokolle der nicht erfolgreichen Sendeaufträge für eine Ausgabe bereitstellt.

Im folgenden wird eine Durchführung des Verfahrens gemäß der Erfindung anhand einer geeigneten Anordnung näher erläutert.

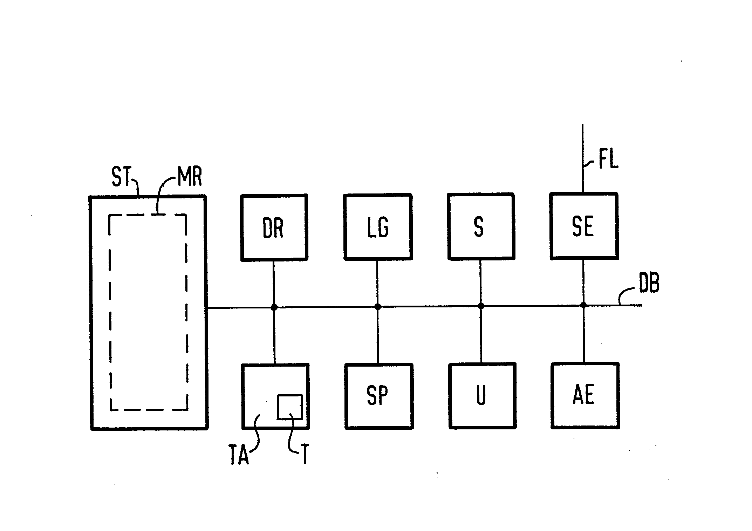

Die Figur zeigt ein Blockschaltbild einer für die Durchführung des Verfahrens geeigneten Textstation.

Bei der in der Figur als Blockschaltbild dargestellten Textstation, die beispielsweise als Fernschreibmaschine ausgebildet ist, sind an einem Datenbus DB als Eingabeeinheit eine Tastatur TA und als Ausgabeeinheiten ein Drucker DR und eine Anzeigeeinheit AE angeschlossen. Über eine Sende/Empfangseinheit SE ist eine Fernleitung FL angeschlossen und als Ein- und Ausgabeeinheit sind ein Lochstreifengerät LG, das als Lochstreifenlocher und Lochstreifenleser ausgebildet ist und/oder ein Sekundärspeicher SP angeschlossen, der beispielsweise als Diskettenspeicher ausgebildet ist. Weiterhin sind an dem Datenbus DB ein interner Speicher S und eine Steuereinheit ST angeschlossen, die vorzugsweise mit einem Mikrorechner MR versehen ist. Der interne Speicher NS ist als Halbleiterspeicher, Magnetblasenspeicher oder ebenfalls als Diskettenspeicher ausgebildet. Die Anzeigeeinheit AE kann ein- oder mehrzeilig ausgebildet sein.

Die Steuereinheit ST steuert den Ablauf der Funktionen der Fernschreibmaschine unter Verwendung des Mikrorechners MR, der mit einem entsprechenden Programmspeicher versehen ist. Dieser Programmspeicher kann mit dem internen Speicher S eine Einheit bilden. Zusätzlich zu den bekannten Funktionen der Fernschreibmaschine steuert die Steuereinheit ST die Abarbeitung von Sendeaufträgen und die Erzeugung von Kurzprotokollen bei nicht erfolgreich ausgeführten Sendeaufträgen. Die Textstation kann einen Uhrenbaustein U enthalten, unter dessen Verwendung die Sendeaufträge zu vorgegebenen Zeitpunkten ausgeführt werden können. Dies ist beispielsweise dann zweckmäßig, wenn die Sendeaufträge zu Zeitpunkten ausgeführt werden sollen, zu denen die Übertragungen besonders kostengünstig durchgeführt werden können.

Die Sendeaufträge werden mittels einer Eingabeeinheit, nämlich der Tastatur TA, dem Lochstreifengerät LG oder dem externen Speicher SP eingegeben und im internen Speicher S gespeichert. Dieser Speicher S kann aus einer einzigen Speichereinheit oder aus mehreren Speichereinheiten bestehen, wo die Sendeaufträge und die zugehörigen Texte gemeinsam bzw. getrennt gespeichert werden. In jedem Sen-

0150341

deauftrag kann angegeben werden, zu welchem Zeitpunkt der
Sendeauftrag ausgeführt werden soll. Falls die mittels
des externen Speichers SP eingegebenen Sendeaufträge und
die Texte nicht auf einem einzigen Datenträger, beispielsweise einer gemeinsamen Diskette gespeichert sind, können
diese zeitlich nacheinander von verschiedenen Datenträgern in den internen Speicher S eingelesen werden.

Wenn im internen Speicher S die vollständige Auftragsliste gespeichert ist, kann mit der Ausführung der Sendeaufträge begonnen werden. Zu den jeweils vorgegebenen
Zeitpunkten wird unter Verwendung des Uhrenbausteins U
über die Sende/Empfangseinheit SE und die Fernleitung FL
mittels der Steuereinheit ST die Verbindung zu der entsprechenden empfangenden Textstation hergestellt. Der
Verbindungsaufbau wird dabei mittels des Druckers DR protokolliert, wobei beispielsweise die Rufnummer der fernen
Textstation, die Kennung, das Datum und die Uhrzeit ausgedruckt werden. Bei mehreren Versuchen zum Verbindungsaufbau werden diese vollständig protokolliert. Bei erfolgreichem Verbindungsaufbau und anschließender Übertragung des zugehörigen Textes wird dieser ebenfalls unter
Verwendung des Druckers DR ausgedruckt. Der Text wird in
bekannter Weise unter Steuerung durch die Steuereinheit
ST vom Speicher S über den Datenbus DB einerseits der
Sende/Empfangseinheit SE und von dort über die Fernleitung FL übertragen und andererseits wird der Text über
den Datenbus DB zum Drucker DR übertragen und dort ausgedruckt. Nach der erfolgreichen Durchführung des Sendeauftrags werden dieser und der zugehörige Text im Speicher S
gelöscht.

Falls ein Sendeauftrag nicht ausführbar ist, weil beispielsweise keine Verbindung zur empfangenden Textstation
hergestellt werden kann oder weil die Rufnummer oder die
Kennung der empfangenden Textstation fehlerhaft eingegeben wurden, werden alle Verbindungsaufbauversuche, die durch die Steuereinheit ST gesteuert werden, ebenfalls mittels des Druckers DR protokolliert. Nach einer vorgegebenen Anzahl von Verbindungsaufbauversuchen gilt der Sendeauftrag als nicht ausführbar und es wird der nächste Sendeauftrag ausgeführt. Die Steuereinheit ST erzeugt ein Kurzprotokoll, das beispielsweise neben den üblichen Angaben wie Sendeauftragsnummer, Rufnummer der empfangenden Textstation, Kennung, Datum und Uhrzeit Fehlermeldungen enthalten kann, die darauf schließen lassen, warum die Verbindung zur empfangenden Textstation nicht hergestellt werden konnte. Dieses Kurzprotokoll wird im Speicher S gespeichert. Der Sendeauftrag und der zugehörige Text werden in diesem Fall nicht gelöscht.

Das Kurzprotokoll kann sofort an der Anzeigeeinheit AE ausgegeben werden. Zweckmäßigerweise erfolgt die Ausgabe jedoch erst nach dem Betätigen einer entsprechenden Taste T an der Tastatur TA. Es ist auch möglich, die Kurzprotokolle sämtlicher unerledigter Sendeaufträge selbsttätig nach der Ausführung aller Sendeaufträge am Drucker DR, am Lochstreifengerät LG, am externen Speicher SP oder an der Anzeigeeinheit AE auszugeben. Auch in diesem Fall ist es möglich, die Ausgabe erst dann stattfinden zu lassen, wenn an der Tastatur TA die Taste T betätigt wird. Auf diese Weise ist es möglich, daß ein Bediener auch bei einer Vielzahl von ausgeführten Sendeaufträgen sofort feststellen kann, welche Sendeaufträge nicht erfolgreich ausgeführt wurden. Der Bediener kann, da alle Sendeaufträge und die zugehörigen Texte noch erhalten sind, sofort eine erneute Ausführung der Sendeaufträge veranlassen. Detaillierte Angaben über die nicht ausgeführten Sendeaufträge können dem vom Drucker DR ausgegebenen Protokoll bei den Verbindungsaufbauversuchen entnommen werden. Da die Kurzprotokolle sehr schnell und übersichtlich zur Verfügung stehen und nur diejenigen Kurzprotokolle

0150341
84 P 1055 E

dargestellt sind, die die nicht ausgeführten Sendeaufträge betreffen, ist es für den Bediener nicht erforderlich, alle vom Drucker DR während der Zeitdauer, während der die Maschine unbedient war, ausgegebenen Protokolle zu überprüfen, ob die Sendeaufträge auch tatsächlich durchgeführt wurden. Dies ist insbesondere dann von Vorteil, wenn sehr viele Sendeaufträge unbedient ausgeführt wurden.

6 Patentansprüche

1 Figur

## Patentansprüche

1. Verfahren zum selbsttätigen Protokollieren von Sendeaufträgen für zu übertragende Texte, bei dem die Texte von einer sendenden Textstation zu einer empfangenden Textstation übertragen werden, bei dem die Texte in der sendenden Textstation mittels mindestens einer Eingabeeinheit eingegeben werden, in einem internen Speicher gespeichert werden, über eine Fernleitung übertragbar sind und an einer Ausgabeeinheit ausgebbar sind, g e k e n n - z e i c h n e t   d u r c h   folgende Verfahrensschritte:

a) alle mittels der Eingabeeinheiten (TA, LG, SP) eingegebenen und zu übertragenden Texte und die zugehörigen Sendeaufträge werden in einem internen Speicher (S) gespeichert,

b) entsprechend dem jeweiligen Sendeauftrag wird eine Verbindung zu der empfangenden Textstation hergestellt und die Texte werden bei erfolgreichem Verbindungsaufbau zur empfangenden Textstation übertragen,

c) die erfolgreich ausgeführten Sendeaufträge werden in an sich bekannter Weise durch Verbindungsprotokolle und die übertragenen Texte protokolliert,

d) nur zu den nicht erfolgreich ausgeführten Sendeaufträgen werden Kurzprotokolle erzeugt, die an einer der Ausgabeeinheiten (DR, AE, LG, SP) ausgegeben werden.

2. Verfahren nach Anspruch 1, d a d u r c h   g e - k e n n z e i c h n e t ,   daß die Kurzprotokolle der nicht erfolgreich ausgeführten Sendeaufträge an einer mit ein- oder mehrzeiligen Anzeigen versehenen Anzeigeeinheit (AE) ausgegeben werden.

3. Verfahren nach Anspruch 1 oder Anspruch 2, d a - d u r c h   g e k e n n z e i c h n e t ,   daß die Kurzprotokolle der nicht erfolgreich ausgeführten Sendeaufträge erst nach dem Betätigen einer entsprechenden Taste (T) an einer Tastatur (TA) ausgegeben werden.

4. Verfahren nach einem der Ansprüche 1 bis 3, d a - d u r c h  g e k e n n z e i c h n e t , daß die Sendeaufträge und die zugehörigen Texte bei einem erfolgreich ausgeführten Sendeauftrag im internen Speicher (S) gelöscht werden.

5. Verfahren nach einem der Ansprüche 1 bis 4, d a - d u r c h  g e k e n n z e i c h n e t ,  daß die Sendeaufträge und/oder die Texte mittels verschiedener Datenträger des externen Speichers (SP) und/oder über eine Tastatur (TA) eingegeben und im internen Speicher (S) gespeichert werden.

6. Anordnung zur Durchführung des Verfahrens nach Anspruch 1, g e k e n n z e i c h n e t  d u r c h einen internen Speicher (S) der Textstation, in dem die Sendeaufträge und die zugehörigen Texte speicherbar sind, durch eine Steuereinheit (ST), die bei der Ausführung der Sendeaufträge den Verbindungsaufbau und Verbindungsabbau mit der empfangenden Textstation durchführt, die bei erfolgreicher Verbindung die Texte zu der empfangenden Textstation über die Sende/Empfangseinheit (SE) überträgt, die Übertragung in an sich bekannter Weise einschließlich der zugehörigen Texte mittels einer als Drucker (DR) ausgebildeten Ausgabeeinheit protokolliert und die bei nicht erfolgreich ausgeführten Sendeaufträgen Kurzprotokolle erzeugt, die im internen Speicher (S) gespeichert sind und an einer der Ausgabeeinheiten (DR, AE, LG, SP) ausgebbar sind.